# EUROPÄISCHE PATENTSCHRIFT

(11) **EP 4 541 447 B1**
(45) Veröffentlichungstag und Bekanntmachung des Hinweises auf die Patenterteilung: **13.05.2026**
(21) Anmeldenummer: 24205663.8
(22) Anmeldetag: 09.10.2024
(51) Int. Cl.: B01D 46/00, B01D 46/10, B01D 46/52

(54) **FILTER UND FILTERANORDNUNG**
FILTER AND FILTER ASSEMBLY
FILTRE ET ENSEMBLE FILTRE

(30) Priorität: 16.10.2023 EP 23203684
(43) Veröffentlichungstag der Anmeldung: 23.04.2025
(73) Patentinhaber: Carl Freudenberg KG, 69469 Weinheim (DE)
(72) Erfinder: Güngör, Bastan, 63303 Dreieich (DE); Bickel, Maria, 68542 Heddesheim (DE); Breuer, Andreas, 69488 Birkenau (DE)
(74) Vertreter: Reiser & Partner Patentanwälte mbB

(56) Entgegenhaltungen:
- EP-A1- 2 692 559
- DE-A1- 102017 007 325
- DE-A1- 102017 007 497
- US-A1- 2020 230 540
- US-A1- 2023 158 433

## Beschreibung

Die Erfindung betrifft einen Filter, umfassend ein plissiertes Filtermedium, einen Kantenstreifen und zumindest ein Halteelement, wobei der Kantenstreifen an einer Seite des Filtermediums befestigt ist. Die Erfindung betrifft ferner eine Filteranordnung, umfassend ein Filtergehäuse und einen Filter.

### Technisches Gebiet

Aus dem Stand der Technik sind Filter zur Filtration von Fluiden allgemein bekannt. Insbesondere bei der Luftfiltration für Fahrzeugkabinen kommen Filter mit plissierten Filtermedien zum Einsatz. Die Filtermedien können dabei verschiedene Lagen aufweisen, wobei die Ausgestaltung und Eigenschaften der verschiedenen Lagen den Abscheidegrad des Filters bestimmen und auf den jeweiligen Einsatzzweck angepasst werden können. Zumeist ist es nach einer vorbestimmten Einsatzzeit oder bei starker Verschmutzung des Filtermediums erforderlich, den Filter auszutauschen. Zu diesem Zweck sind Filter derart ausgebildet, so dass sie austauschbar zum Beispiel in einem Filtergehäuse angeordnet werden können.

### Stand der Technik

DE 202 21 005 U1 zeigt einen Luftfilter mit einem Filterelement, sowie ein Luftfiltergehäuse mit einer mittels eines Deckels verschließbaren Luftfilteröffnung.

Der Luftfilter umfasst eine Dichtung zur Abdichtung zwischen Luftfiltergehäuse und Deckel.

DE 10 2017 007325 A1, EP 2 692 559 A1, US 2023/158433 A1, US 2020/230540 A1 und DE 10 2017 007497 A zeigen jeweils Filter mit einem Filtermedium, einem Kantenstreifen und einem Halteelement.

### Darstellung der Erfindung

Der Erfindung liegt die Aufgabe zugrunde, einen Filter bereitzustellen, welcher bei verbesserter Handhabbarkeit kostengünstig herstellbar ist.

Die Aufgabe wird mit den Merkmalen von Anspruch 1 gelöst. Auf vorteilhafte Ausgestaltungen nehmen die Unteransprüche Bezug.

Der erfindungsgemäße Filter umfasst ein plissiertes Filtermedium, einen Kantenstreifen und zumindest ein Halteelement, wobei der Kantenstreifen an einer Seite des Filtermediums befestigt ist, wobei das Halteelement dem Kantenstreifen zugeordnet ist, wobei der Kantenstreifen und das Halteelement eine Verschlussstruktur zur Fixierung des Filters in einem Filtergehäuse ausbilden.

Das Halteelement weist erfindungsgemäß eine Haltestruktur auf, wobei die Haltestruktur eine Rastfahne und einen Griffabschnitt umfasst. Die Rastfahne kann als Einrastlasche ausgestaltet sein, so dass das Halteelement mittels der Einrastlasche formschlüssig in dem Filtergehäuse festgelegt werden kann. Denkbar ist in diesem Zusammenhang auch, dass die Rastfahne als Schnappverschluss oder Rastnase ausgebildet ist. Dadurch kann der Filter mit dem Filtergehäuse lösbar verbunden werden, um so die Austauschbarkeit des Filters zu verbessern. Durch den Griffabschnitt kann die Verbindung zwischen Filter und Filtergehäuse werkzeuglos hergestellt und wieder gelöst werden, so dass die Handhabbarkeit bei der Montage verbessert wird. Durch die Ausgestaltung des Halteelementes mit Rastabschnitt und Griffabschnitt kann der Filter einfach, schnell und werkzeuglos aus dem Filtergehäuse entnommen werden. Es ist insbesondere nicht erforderlich, den Filter im Filtergehäuse durch separate Befestigungsmittel, wie Deckel und dergleichen zu fixieren. Zum Demontieren können die Halteelemente an den Griffabschnitten gegriffen und so gebogen werden, dass sich die Rastmittel, bspw. die Rastfahnen oder die Rastnasen, aus den Befestigungsabschnitten des Filtergehäuses lösen, sodass der Filter entnommen werden kann.

Das Halteelement kann einen plattenförmigen Grundkörper mit zwei Hauptseiten aufweisen, wobei die Haltestruktur der ersten, dem Kantenstreifen abgewandten Hauptseite zugeordnet ist. Das Halteelement kann mit der zweiten, dem Kantenstreifen zugewandten Hauptseite an dem Kantenstreifen angeordnet sein. Der Grundkörper kann dabei an einer Schmalseite des Kantenstreifens angeordnet sein. Insbesondere kann der Grundkörper bündig an einer der Schmalseiten des Kantenstreifens angeordnet sein. Der Kantenstreifen kann eine dem Filtermedium abgewandte Außenseite umfassen, wobei das Halteelement auf der Außenseite des Kantenstreifens angeordnet ist.

Das Filtermedium kann zick-zack-förmig ausgebildet sein und länglich ausgebildete Faltenwände und Faltenrücken aufweisen. Dadurch vergrößert sich die Filteroberfläche des Filtermediums. Das Filtermedium kann derart an dem Kantenstreifen angeordnet sein, dass die Faltenwände und die Faltenrücken im Wesentlichen orthogonal von dem Kantenstreifen abragen.

Der Filter umfasst erfindungsgemäß eine Dichtung zur Abdichtung von Filter und Filtergehäuse, wobei die Dichtung durch den Kantenstreifen ausgebildet ist. Das Filtergehäuse weist einen Aufnahmeraum mit Aufnahmeöffnung auf, wobei das Filtermedium über die Aufnahmeöffnung in den Aufnahmeraum eingeschoben wird. Zwischen Filtermedium und Filtergehäuse ergibt sich dabei ein umlaufender Spalt. Die Ränder des Kantenstreifens sind derart ausgebildet, dass diese im montierten Zustand an dem Filtergehäuse zur Anlage kommen, um den Spalt zu überdecken und somit die Dichtigkeit zu verbessern. Zur Abdichtung des Spaltes ist daher keine Gesonderte Dichtung erforderlich, so dass die Anzahl der benötigten Bauteile verringert werden kann, um eine kostengünstige Herstellung zu erreichen.

Der Kantenstreifen kann zumindest an seinen Längsseiten jeweils ein über das Filtermedium ragendes freies Ende aufweisen, das die Dichtung ausbildet. Das freie Ende kann den Spalt zwischen Filtermedium und Filtergehäuse derart ausfüllen, dass die Dichtigkeit verbessert wird. Das freie Ende kann elastisch ausgebildet sein, so dass beim Einführen des Filters in das Filtergehäuse das freie Ende verformt und komprimiert wird. Dadurch können Unebenheiten des Spalts, beispielsweise durch Fertigungstoleranzen, ausgeglichen und die Dichtigkeit weiter verbessert werden. Der Kantenstreifen kann auch an seinen Schmalseiten jeweils ein über das Filtermedium ragendes freies Ende aufweisen, das die Dichtung ausbildet. Dadurch bildet sich eine umlaufende Dichtung aus. An den Schmalseiten kann eine verbesserte Abdichtung auch über ein dort angeordnetes Halteelement erreicht werden, welches ebenfalls eine Dichtung ausbildet.

Das Halteelement und/oder der Kantenstreifen können aus Vliesstoff ausgebildet sein. Vliesstoffe sind kostengünstig herstellbar und weisen sehr gute Filterleistungen auf.

Das Material des Kantenstreifens kann ein Flächengewicht von mehr als 140 g/m² aufweisen. Das Material des Kantenstreifens kann ein Flächengewicht von weniger als 800 g/m² aufweisen.

Das Material des Halteelements kann ein Flächengewicht von mehr als 400 g/m² aufweisen. Bevorzugt kann das Flächengewicht größer als 500 g/m² sein. Das Material des Halteelements kann ein Flächengewicht von weniger als 800 g/m² aufweisen. Bevorzugt kann das Flächengewicht weniger als 700 g/m² sein. In einer besonders bevorzugten Ausführungsform kann das Material des Halteelements ein Flächengewicht von etwa 580 g/m² aufweisen.

Das Halteelement und der Kantensteifen können einstückig und materialeinheitlich ausgebildet sein. Durch diese Ausgestaltung kann die Anzahl der Bauteile weiter reduziert und somit die Handhabbarkeit bei Montage und Demontage weiter verbessert werden. Durch die Materialeinheitlichkeit kann der Filter als ein sortenreines Bauteil hergestellt werden, so dass auch die Wiederverwertbarkeit verbessert werden kann. Weiterhin kann der Herstellungsprozess vereinfacht werden, da keine Montageschritte zur Verbindung zwischen Halteelement und Kantenstreifen erforderlich sind.

Das Halteelement kann aus spritzgießfähigem Kunststoff und der Kantenstreifen aus Vliesstoff ausgebildet sein, wobei das Halteelement mit dem Kantenstreifen verbunden ist. Das Halteelement ist dabei als Formteil ausgebildet. Bevorzugt ist das Halteelement aus Thermoplast ausgebildet. Die Verbindung zwischen Halteelement und Kantenstreifen kann durch eine stoffschlüssige Verbindung erreicht werden. Bevorzugt wird die Verbindung durch Ultraschallschweißen oder Kleben erzeugt.

Der Filter kann zumindest ein Halteelement aufweisen. Das Halteelement verbessert das Handling des Filters und vereinfacht die Montage in das Filtergehäuse und die Entnahme des Filters aus dem Filtergehäuse. Gemäß einer ersten vorteilhaften Ausgestaltung sind zwei Halteelemente vorgesehen, die jeweils gegenüberliegend an dem Kantenstreifen an den beiden Schmalseiten des Kantenstreifens angeordnet sein können. Gemäß einer weiteren vorteilhaften Ausgestaltung zwischen zwei Halteelemente vorgesehen, welche mittig an den beiden Längsseiten angeordnet sind. Ebenso ist denkbar, nur ein einziges Halteelement vorzusehen, welches über die beiden Längsseiten hinaussteht. Die Anzahl und Anordnung der Halteelemente ist somit variabel und kann insbesondere an den zur Verfügung stehenden Bauraum angepasst werden. Dementsprechend können Halteelemente auch in anderen Bereichen an der Stirnseite des Filters angeordnet sein.

Vorzugsweise ist die Anordnung der beiden Halteelemente auf die unmittelbaren Bereiche an den beiden Schmalseiten des Kantenstreifens beschränkt. Die beiden Halteelemente erstrecken sich in Längsrichtung des Kantenstreifens vorzugsweise auf jeweils weniger als 20 % der Länge des Kantenstreifens. Dadurch sind die zwei Halteelemente lediglich in den Endbereichen des Kantenstreifens angeordnet, so dass in einem Mittenbereich des Kantenstreifens zwischen den Endbereichen kein Halteelement angeordnet ist. Die Halteelemente sind dadurch kleiner dimensioniert, so dass weniger Material zur Herstellung benötigt wird, um eine kostengünstigere Herstellung zu ermöglichen.

Der Filter kann als Innenraumfilter für mobile Anwendungen ausgebildet sein. Eine Anwendung ist hier insbesondere in Kraftfahrzeugen zur Filtration der Fahrzeugkabine gegeben.

Die erfindungsgemäße Filteranordnung, umfasst ein Filtergehäuse und einen erfindungsgemäßen Filter, wobei das Filtergehäuse einen Aufnahmeraum und eine Aufnahmeöffnung aufweist, wobei das Filtergehäuse eine weitere Verschlussstruktur aufweist, die der Aufnahmeöffnung zugeordnet und komplementär zu der Verschlussstruktur des Filters ausgebildet ist, so dass die Aufnahmeöffnung mittels der Verschlussstruktur des Filters verschließbar ist.

Die Verschlussstruktur des Filtergehäuses umfasst zumindest ein weiteres Halteelement, so dass das Halteelement des Filters an dem Halteelement des Filtergehäuses festgelegt werden kann, um den Filter mit dem Filtergehäuse zu verbinden. Vorzugsweise weist das Halteelement des Filtergehäuses eine komplementäre Form zu dem Halteelement des Filters auf, so dass die Halteelemente formschlüssig verbindbar sind. Denkbar ist auch, dass die Halteelemente kraftschlüssig verbindbar sind. Der Filter kann so lösbar mit dem Filtergehäuse verbunden werden, wodurch die Handhabbarkeit verbessert wird.

### Kurzbeschreibung der Zeichnung

Eine Ausgestaltung des erfindungsgemäßen Filters und der erfindungsgemäßen Filteranordnung wird nachfolgend anhand der Figuren näher erläutert. Diese zeigen, jeweils schematisch:
- Fig. 1: eine perspektivische Darstellung einer ersten Ausführungsform eines Filters;
- Fig. 2: eine weitere perspektivische Darstellung des Filters aus Figur 1;
- Fig. 3: eine Detailansicht eines Halteelements des Filters aus Figur 1;
- Fig. 4: eine perspektivische Darstellung einer zweite Ausführungsform eines Filters;
- Fig. 5: eine perspektivische Ansicht einer ersten Ausführungsform einer Filteranordnung mit einem Filter aus Figur 1;
- Fig. 6: eine perspektivische Ansicht einer zweiten Ausführungsform einer Filteranordnung mit einem Filter aus Figur 2.

### Ausführung der Erfindung

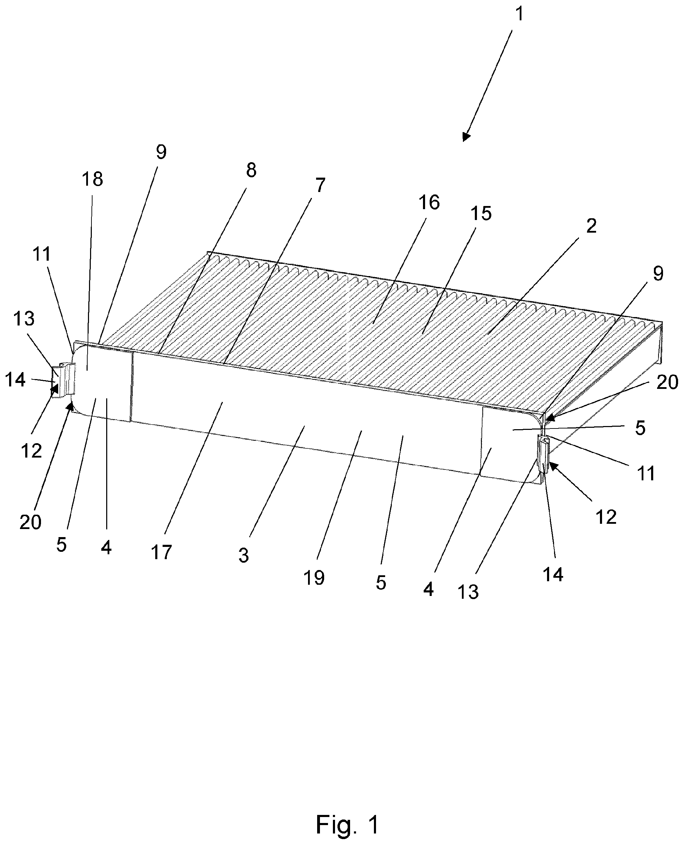

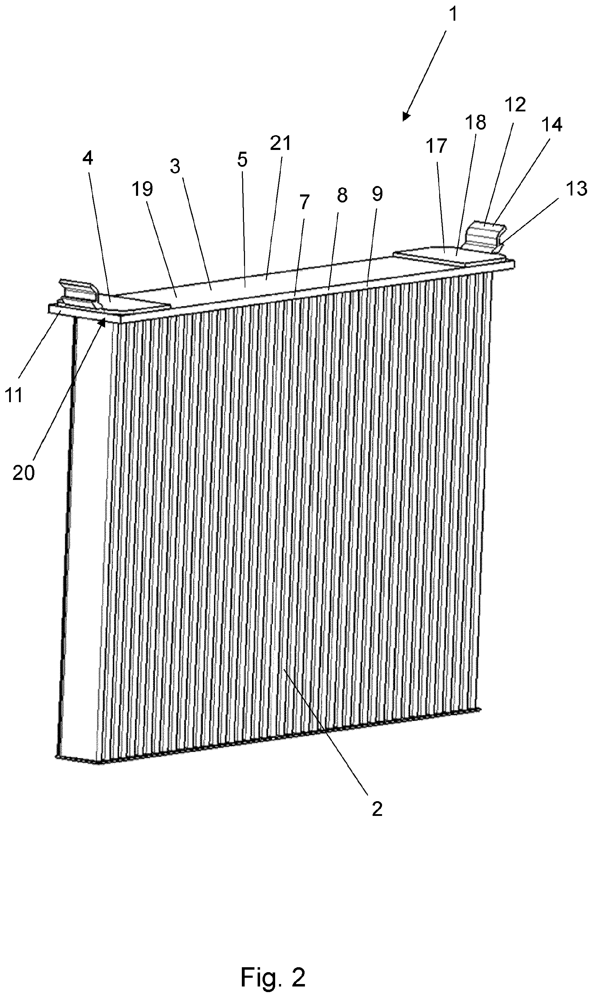

**Fig. 1 bis 3** zeigen eine erste Ausführungsform eines erfindungsgemäßen Filters 1.

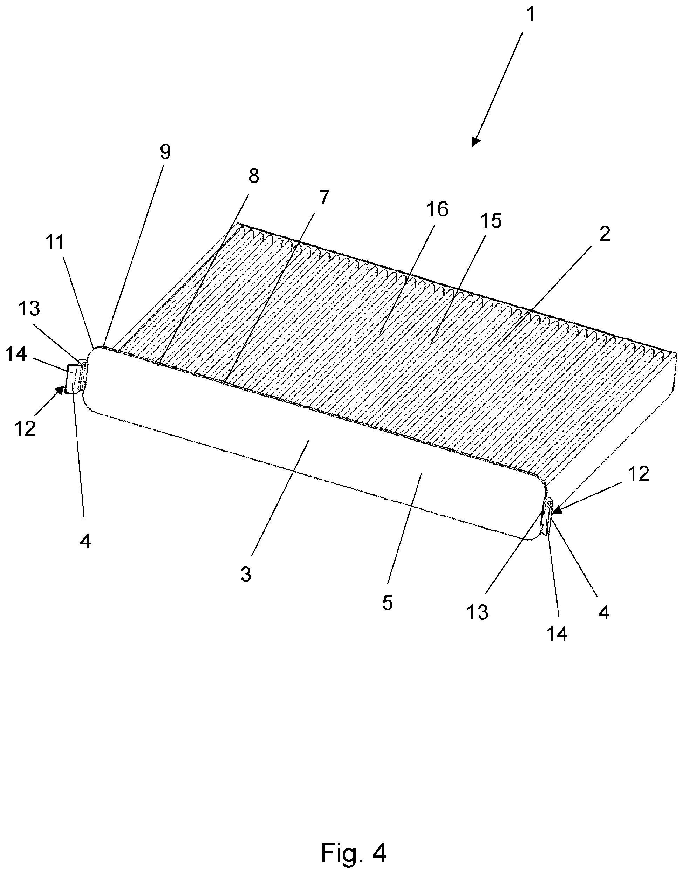

**Fig. 4** zeigt eine zweite Ausführungsform eines erfindungsgemäßen Filters 1. Zunächst werden die Gemeinsamkeiten beider Filter 1 zusammen beschrieben.

Der Filter 1 ist als Innenraumfilter für mobile Anwendungen, insbesondere für Anwendungen zur Filtration der Innenraumluft von Kraftfahrzeugen, ausgebildet.

Der in den Figuren dargestellte Filter 1 umfasst ein plissiertes Filtermedium 2, einen Kantenstreifen 3 und zwei Halteelemente 4. Die beiden Halteelemente 4 sind jeweils gegenüberliegend an dem Kantenstreifen 3 an den beiden Schmalseiten 11 des Kantenstreifens 3 angeordnet. Der Kantenstreifen 3 ist an einer Seite des Filtermediums 2 befestigt. Das Halteelement 4 ist dem Kantenstreifen 3 zugeordnet. Der Kantenstreifen 3 und das Halteelement 4 bilden eine Verschlussstruktur 5 zur Fixierung des Filters 1 in einem Filtergehäuse aus. Das Filtergehäuse ist zur besseren Übersicht hier nicht dargestellt.

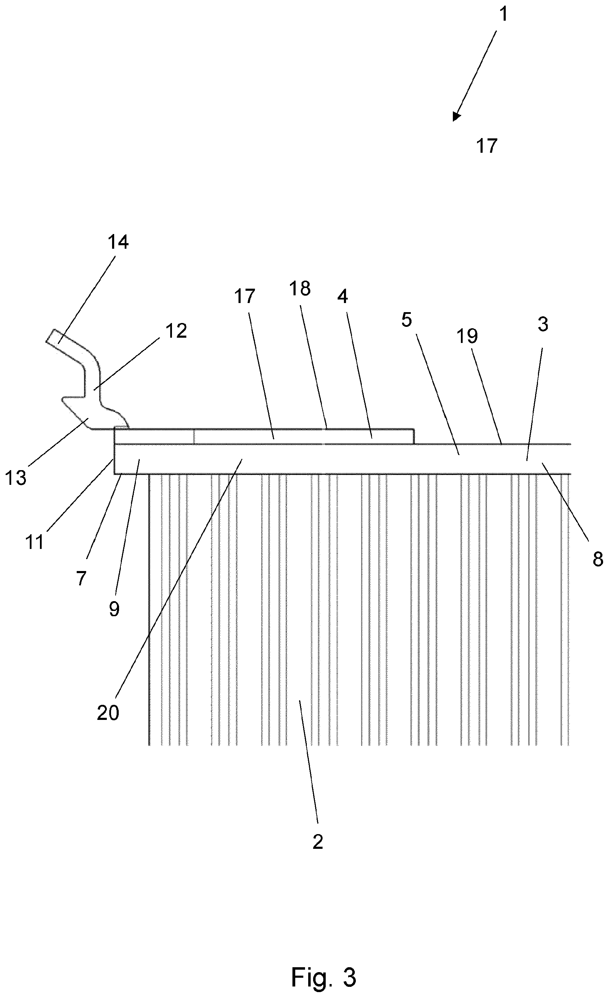

Die Halteelemente 4 weisen jeweils eine Haltestruktur 12 auf, wobei die Haltestruktur 12 eine Rastfahne 13 und einen Griffabschnitt 14 umfasst. Die Haltestruktur 12 ist besonders gut in **Fig. 3** ersichtlich. Die Rastfahne 13 ist als Einrastlasche ausgestaltet, so dass jede der Halteelemente 4 mittels der Einrastlasche formschlüssig in dem Filtergehäuse festgelegt werden können. Denkbar ist in diesem Zusammenhang auch, dass die Rastfahne 13 als Schnappverschluss oder Rastnase ausgebildet ist. Dadurch kann der Filter 1 mit dem Filtergehäuse lösbar verbunden werden. Durch den Griffabschnitt 14 kann die Verbindung zwischen Filter 1 und Filtergehäuse händisch und werkzeuglos hergestellt und wieder gelöst werden.

Das Filtermedium 2 ist zick-zack-förmig ausgebildet und weist länglich ausgebildete Faltenwände 15 und Faltenrücken 16 auf, so dass die Filteroberfläche des Filtermediums 2 vergrößert ist, um das Filterergebnis zu verbessern. Das Filtermedium 2 ist derart an dem Kantenstreifen 3 angeordnet, dass die Faltenwände 15 und die Faltenrücken 16 im Wesentlichen orthogonal von dem Kantenstreifen 3 abragen.

Der Filter 1 umfasst eine Dichtung 7 zur Abdichtung von Filter 1 und Filtergehäuse, wobei die Dichtung 7 durch den Kantenstreifen 3 ausgebildet ist. Der Kantenstreifen 3 weist dazu an seinen Längsseiten 8 und an seinen Schmalseiten 11 jeweils ein über das Filtermedium 2 ragendes freies Ende 9 auf, das die Dichtung 7 ausbildet. Das freie Ende 9 ist insbesondere aus **Fig. 1** ersichtlich. Das freie Ende 9 kann den Spalt zwischen Filtermedium 2 und Filtergehäuse derart ausfüllen, dass die Dichtigkeit verbessert wird. Das freie Ende 9 ist elastisch ausgebildet.

Die **Fig. 1 bis 3** zeigen eine erste Ausführungsform eines erfindungsgemäßen Filters 1, bei der das Halteelement 4 aus spritzgießfähigem Kunststoff und der Kantenstreifen 3 aus Vliesstoff ausgebildet ist. Das Halteelement 4 ist mit dem Kantenstreifen 3 verbunden. Das Halteelement 4 ist dabei als Formteil aus Thermoplast ausgebildet. Halteelement 4 und Kantenstreifen 3 sind stoffschlüssig verbunden. Bevorzugt wird die Verbindung durch Ultraschallschweißen oder Kleben erzeugt.

Das Halteelement 4 weist einen plattenförmigen Grundkörper 17 mit zwei Hauptseiten auf, wobei die Haltestruktur 12 der ersten, dem Kantenstreifen 3 abgewandten Hauptseite 18 zugeordnet ist. Das Halteelement 4 ist mit der zweiten, dem Kantenstreifen 3 zugewandten Hauptseite an dem Kantenstreifen 3 angeordnet. Der Grundkörper 17 ist dabei an einer der Schmalseiten 11 des Kantenstreifens 3 angeordnet. Der Grundkörper 17 ist bündig an einer der Schmalseiten 11 des Kantenstreifens 3 angeordnet. Der Kantenstreifen 3 umfasst eine dem Filtermedium 2 abgewandte Außenseite 19, wobei das Halteelement 4 auf der Außenseite 19 des Kantenstreifens 3 angeordnet ist.

Die Anordnung der beiden Halteelemente 4 ist auf die unmittelbaren Endbereiche 20 an den beiden Schmalseiten 11 des Kantenstreifens 3 beschränkt. Die beiden Halteelemente 4 erstrecken sich in Längsrichtung des Kantenstreifens 3 auf jeweils weniger als 10 % der Länge des Kantenstreifens 3. Dadurch sind die zwei Halteelemente 4 lediglich in den Endbereichen 20 des Kantenstreifens 3 angeordnet, so dass in einem Mittenbereich 21 des Kantenstreifens 3 zwischen den Endbereichen 20 kein Halteelement 4 angeordnet ist.

**Fig. 4** zeigt eine zweite Ausführungsform eines erfindungsgemäßen Filters 1, bei dem das Halteelement 4 und der Kantensteifen 3 einstückig und materialeinheitlich ausgebildet sind. Das Halteelement 4 und der Kantenstreifen 3 sind aus Vliesstoff ausgebildet. Das Material von Halteelement 4 und Kantenstreifen 3 weist ein Flächengewicht von etwa 580 g/m² auf. In dieser Ausführungsform ist die Haltestruktur 12 des Halteelements 4 unmittelbar in den Kantenstreifen 3 integriert.

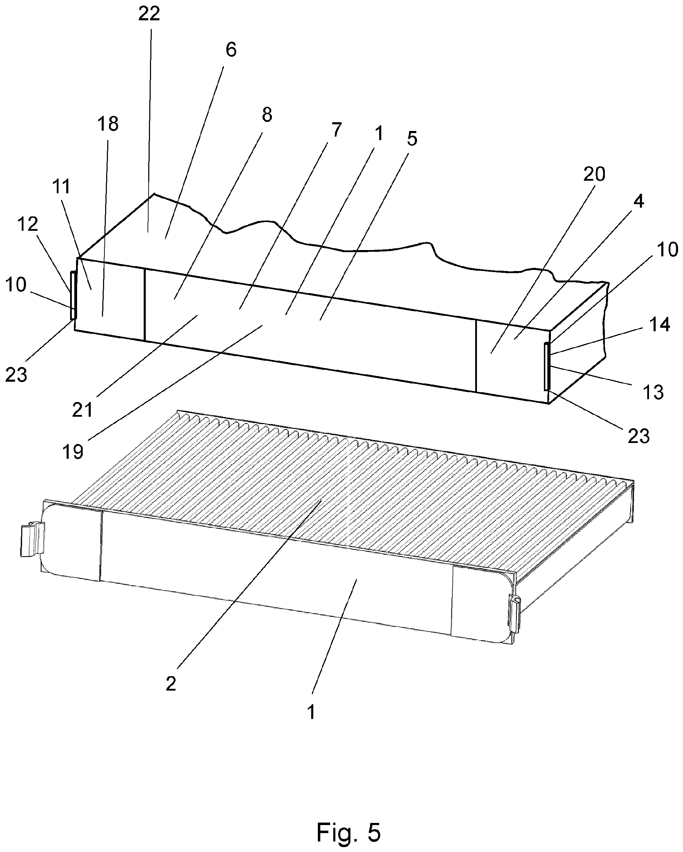

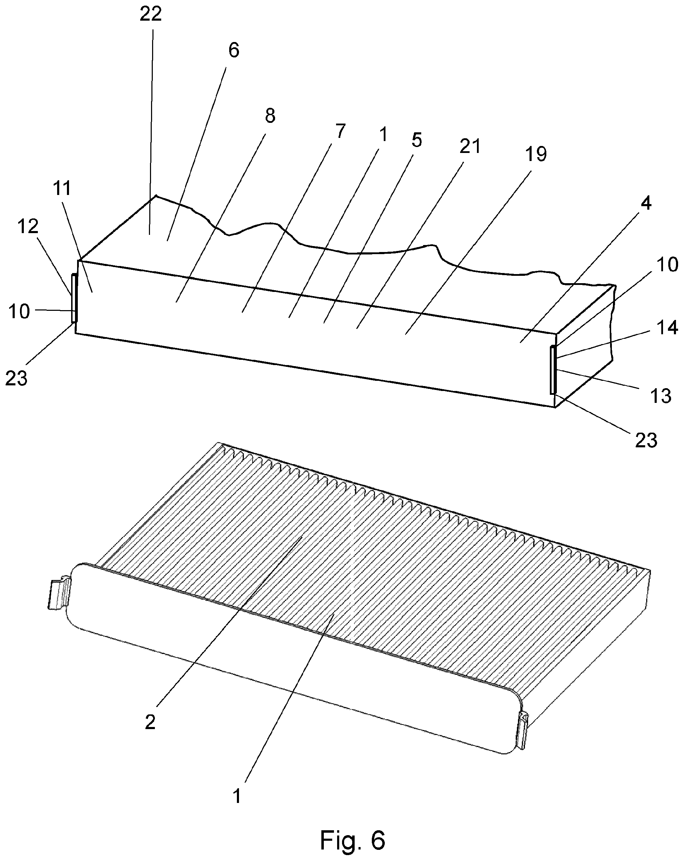

**Fig. 5** zeigt eine erste Ausführungsform einer Filteranordnung 22. Die Filteranordnung 22 umfasst ein Filtergehäuse 6 und einen Filter 1, in dieser Ausführungsform den Filter 1 aus **Fig. 1****.** **Fig. 6** zeigt eine zweite Ausführungsform einer Filteranordnung 22. Die Filteranordnung 22 umfasst ein Filtergehäuse 6 und einen Filter 1, in dieser Ausführungsform den Filter 1 aus **Fig. 4****.** Die in den **Fig. 5** **und** **6** dargestellten Filtergehäuse 6 werden nachfolgend gemeinsam beschrieben. Die jeweiligen Filter 1 wurden oben in den Beschreibungen zu den **Fig. 1 bis 3** **bzw. 4** beschrieben.

Das Filtergehäuse 6 weist einen Aufnahmeraum und eine Aufnahmeöffnung auf. Zudem weist das Filtergehäuse 6 eine weitere Verschlussstruktur 10 auf, die der Aufnahmeöffnung zugeordnet und komplementär zu der Verschlussstruktur 5 des Filters 1 ausgebildet ist, so dass die Aufnahmeöffnung mittels der Verschlussstruktur 5 des Filters 1 verschließbar ist.

Die Verschlussstruktur 10 des Filtergehäuses 6 umfasst zwei weitere Halteelemente 23, so dass die Halteelemente 4 des Filters 1 an den Halteelementen 23 des Filtergehäuses 6 festgelegt sind, um den Filter 1 mit dem Filtergehäuse 6 zu verbinden. Die Halteelemente 23 des Filtergehäuses 6 weisen eine komplementäre Form zu den Halteelementen 4 des Filters 1 auf, so dass die Halteelemente 4, 23 formschlüssig verbindbar sind.

## Patentansprüche

1. Filter (1), umfassend ein plissiertes Filtermedium (2), einen Kantenstreifen (3) und zumindest ein Halteelement (4), wobei der Kantenstreifen (3) an einer Seite des Filtermediums (2) befestigt ist, wobei das Halteelement (4) dem Kantenstreifen (3) zugeordnet ist, wobei der Kantenstreifen (3) und das Halteelement (4) eine Verschlussstruktur (5) zur Fixierung des Filters (1) in einem Filtergehäuse (6) ausbilden, wobei das Halteelement (4) eine Haltestruktur (12) aufweist, wobei die Haltestruktur (12) eine Rastfahne (13) und einen Griffabschnitt (14) umfasst, **dadurch gekennzeichnet, dass** der Filter (1) eine Dichtung (7) zur Abdichtung von Filter (1) und Filtergehäuse (6) umfasst, wobei die Dichtung (7) durch den Kantenstreifen (3) ausgebildet ist.

2. Filter nach Anspruch 1, **dadurch gekennzeichnet, dass** die Rastfahne (13) derart als Einrastlasche ausgestaltet ist, dass das Halteelement (4) mittels der Einrastlasche formschlüssig in dem Filtergehäuse (6) festlegbar ist.

3. Filter nach Anspruch 1 oder 2, **dadurch gekennzeichnet, dass** die Verbindung zwischen Filter (1) und Filtergehäuse (6) werkzeuglos erfolgt.

4. Filter nach einem der Ansprüche 1 bis 3, **dadurch gekennzeichnet, dass** der Kantenstreifen (3) zumindest an seinen Längsseiten (8) jeweils ein über das Filtermedium (2) ragendes freies Ende (9) aufweist, das die Dichtung (7) ausbildet.

5. Filter nach einem der Ansprüche 1 bis 4, **dadurch gekennzeichnet, dass** das Halteelement (4) und/oder der Kantenstreifen (3) aus Vliesstoff ausgebildet sind.

6. Filter nach Anspruch 5, **dadurch gekennzeichnet, dass** das Material des Halteelements (4) ein Flächengewicht von mehr als 400 g/m² aufweist.

7. Filter nach Anspruch 5 oder 6, **dadurch gekennzeichnet, dass** das Material des Kantenstreifens (3) ein Flächengewicht von mehr als 140 g/m² aufweist.

8. Filter nach einem der Ansprüche 1 bis 7, **dadurch gekennzeichnet, dass** das Halteelement (4) und der Kantensteifen (3) einstückig und materialeinheitlich ausgebildet sind

9. Filter nach einem der Ansprüche 1 bis 7 **dadurch gekennzeichnet, dass** das Halteelement (4) aus spritzgießfähigem Kunststoff und der Kantenstreifen (3) aus Vliesstoff ausgebildet ist, wobei das Halteelement (4) mit dem Kantenstreifen (3) verbunden ist.

10. Filter nach einem der Ansprüche 1 bis 9 **dadurch gekennzeichnet, dass** der Filter (1) zwei Halteelemente (4) aufweist.

11. Filter nach einem der Ansprüche 1 bis 10, **dadurch gekennzeichnet, dass** der Filter (1) als Innenraumfilter für mobile Anwendungen ausgebildet ist.

12. Filteranordnung, umfassend ein Filtergehäuse (6) und einen Filter (1) nach einem der Ansprüche 1 bis 11, **dadurch gekennzeichnet, dass** das Filtergehäuse (6) einen Aufnahmeraum und eine Aufnahmeöffnung aufweist, wobei das Filtergehäuse (6) eine weitere Verschlussstruktur (10) aufweist, die der Aufnahmeöffnung zugeordnet und komplementär zu der Verschlussstruktur (5) des Filters (1) ausgebildet ist, so dass die Aufnahmeöffnung mittels der Verschlussstruktur (5) des Filters (1) verschließbar ist.

## Claims

1. Filter (1) comprising a pleated filter medium (2), an edge strip (3) and at least one retaining element (4), the edge strip (3) being attached to one side of the filter medium (2), the retaining element (4) being associated with the edge strip (3), the edge strip (3) and the retaining element (4) forming a closure structure (5) for fixing the filter (1) in a filter housing (6), the retaining element (4) having a retaining structure (12), the retaining structure (12) having a locking tab (13) and a grip portion (14), **characterized in that** the filter (1) comprises a seal (7) for sealing the filter (1) and the filter housing (6), the seal (7) being formed by the edge strip (3).

2. Filter according to claim 1, **characterized in that** the locking tab (13) is designed as a latching flap in such a way that the retaining element (4) can be form-fittingly locked in the filter housing (6) by means of the latching flap.

3. Filter according to claim 1 or 2, **characterized in that** the connection between the filter (1) and the filter housing (6) is made without tools.

4. Filter according to any of claims 1 to 3, **characterized in that** the edge strip (3) has, at least on each of its longitudinal sides (8), a free end (9) projecting over the filter medium (2), which free end forms the seal (7).

5. Filter according to any of claims 1 to 4, **characterized in that** the retaining element (4) and/or the edge strip (3) are made of non-woven fabric.

6. Filter according to claim 5, **characterized in that** the material of the retaining element (4) has a weight per unit area of more than 400 g/m².

7. Filter according to claim 5 or 6, **characterized in that** the material of the edge strip (3) has a weight per unit area of more than 140 g/m².

8. Filter according to any of claims 1 to 7, **characterized in that** the retaining element (4) and the edge strip (3) are formed in one piece and of a single material.

9. Filter according to any of claims 1 to 7, **characterized in that** the retaining element (4) is made of injection-moldable plastics material and the edge strip (3) is made of non-woven fabric, the retaining element (4) being connected to the edge strip (3).

10. Filter according to any of claims 1 to 9, **characterized in that** the filter (1) comprises two retaining elements (4).

11. Filter according to any of claims 1 to 10, **characterized in that** the filter (1) is designed as an interior air filter for mobile applications.

12. Filter arrangement comprising a filter housing (6) and a filter (1) according to any of claims 1 to 11, **characterized in that** the filter housing (6) comprises a receiving space and a receiving opening, the filter housing (6) having a further closure structure (10) which is associated with the receiving opening and is complementary to the closure structure (5) of the filter (1), so that the receiving opening can be closed by means of the closure structure (5) of the filter (1).

## Revendications

1. Filtre (1), comprenant un milieu filtrant (2) plissé, une bande de bordure (3) et au moins un élément de retenue (4), dans lequel la bande de bordure (3) est fixée à un côté du milieu filtrant (2), dans lequel l'élément de retenue (4) est associé à la bande de bordure (3), dans lequel la bande de bordure (3) et l'élément de retenue (4) forment une structure de fermeture (5) pour la fixation du filtre (1) dans un boîtier de filtre (6), dans lequel l'élément de retenue (4) présente une structure de retenue (12), dans lequel la structure de retenue (12) comprend une patte d'encliquetage (13) et une section de préhension (14),
**caractérisé en ce que** le filtre (1) comprend un joint d'étanchéité (7) pour assurer l'étanchéité du filtre (1) et du boîtier de filtre (6), dans lequel le joint d'étanchéité (7) est formé par la bande de bordure (3).

2. Filtre selon la revendication 1, **caractérisé en ce que** la patte d'encliquetage (13) est conçue comme une languette d'encliquetage de telle sorte que l'élément de retenue (4) peut être fixé par complémentarité de forme dans le boîtier de filtre (6) au moyen de la languette d'encliquetage.

3. Filtre selon la revendication 1 ou 2, **caractérisé en ce que** la liaison entre le filtre (1) et le boîtier de filtre (6) est effectuée sans outil.

4. Filtre selon l'une des revendications 1 à 3, **caractérisé en ce que** la bande de bordure (3) présente au moins sur ses côtés longitudinaux (8) respectivement une extrémité libre (9) dépassant du milieu filtrant (2) et formant le joint d'étanchéité (7).

5. Filtre selon l'une des revendications 1 à 4, **caractérisé en ce que** l'élément de retenue (4) et/ou la bande de bordure (3) sont formés à partir d'un tissu non tissé.

6. Filtre selon la revendication 5, **caractérisé en ce que** le matériau de l'élément de retenue (4) présente une masse surfacique supérieure à 400 g/m².

7. Filtre selon la revendication 5 ou 6, **caractérisé en ce que** le matériau de la bande de bordure (3) présente une masse surfacique supérieure à 140 g/m².

8. Filtre selon l'une des revendications 1 à 7, **caractérisé en ce que** l'élément de retenue (4) et la bande de bordure (3) sont formés d'une seule pièce et à partir du même matériau.

9. Filtre selon l'une des revendications 1 à 7, **caractérisé en ce que** l'élément de retenue (4) est formé à partir d'une matière plastique pouvant être moulée par injection et la bande de bordure (3) est formée à partir d'un tissu non tissé, dans lequel l'élément de retenue (4) est relié à la bande de bordure (3).

10. Filtre selon l'une des revendications 1 à 9, **caractérisé en ce que** le filtre (1) présente deux éléments de retenue (4).

11. Filtre selon l'une des revendications 1 à 10, **caractérisé en ce que** le filtre (1) est formé comme un filtre d'espace intérieur pour des utilisations mobiles.

12. Agencement de filtre, comprenant un boîtier de filtre (6) et un filtre (1) selon
l'une des revendications 1 à 11, **caractérisé en ce que** le boîtier de filtre (6) présente un espace de réception et une ouverture de réception, dans lequel le boîtier de filtre (6) présente une autre structure de fermeture (10) qui est associée à l'ouverture de réception et qui est formée de manière à être complémentaire de la structure de fermeture (5) du filtre (1), de sorte que l'ouverture de réception peut être fermée au moyen de la structure de fermeture (5) du filtre (1).
